# EUROPEAN PATENT APPLICATION

(11) **EP 2 892 255 A1**
(43) Date of publication of application: **08.07.2015**
(21) Application number: 13833456.0
(22) Date of filing: 22.08.2013
(51) Int. Cl.: H04W 4/16, G06Q 30/02

(54) **SYSTEM AND METHOD FOR PROVIDING ADDITIONAL INFORMATION TO MOBILE COMMUNICATION TERMINAL DURING CALL ATTEMPTS**

(30) Priority: 31.08.2012 KR 20120096013
(71) Applicant: TI Square Technology Ltd., Pyeongchon-dong, Dongan-gu Anyang-si, Gyeonggi-do 431-070 (KR)
(72) Inventor: LEE, Gil-soo, Anyang-si Gyeonggi-do 431-070 (KR); CHOI, Do-yeon, Yongin-si Gyeonggi-do 446-908 (KR); PARK, In-young, Seongnam-si Gyeonggi-do 463-772 (KR)
(74) Representative: Grünecker Patent- und Rechtsanwälte PartG mbB
(86) International application number: PCT/KR2013/007547
(87) International publication number: WO 2014/035094

(57) **Abstract**

The present invention relates to a system and method for providing additional information to a mobile communication terminal when a call is attempted, and provides a system for providing additional information to a mobile communication terminal when a call is attempted, the system including a mobile communication terminal configured to, when a call request signal is generated, receive additional information, set for a called telephone number, from an additional information provision server and then display the received additional information on a display unit before a call connection process is performed; and the additional information provision server configured to send the additional information to the mobile communication terminal, and a method using the system. According to the present invention, there can be provided a system and method that are capable of, when a mobile communication terminal, particularly a calling terminal, attempts a call, providing a variety of types of additional information via the mobile communication terminal in a stage prior to the performance of a call connection process.

## Description

### Technical Field

The present invention relates to a system and method for providing additional information to a mobile communication terminal when a call is attempted and, more particularly, to a system and method that are capable of, when a user attempts a call using a mobile communication terminal, providing a variety of types of additional information to the mobile communication terminal before a call connection process is performed.

### Background Art

Recently, with the rapid popularization of so-called smart phones, a simple call-centric conventional mobile communication service environment has been changed into a data communication service-centric environment, and a variety of types of services have been proposed. In particular, the conventional mobile communication service environment is changing into an environment in which web pages are viewed using the Internet, or an application program (application) is installed and then a user can receive a desired service using a mobile communication terminal, that is, a smart phone, everywhere.

However, in connection with a call service, that is, the principal functionality of the mobile communication terminal, there is no significant difference with that of a conventional method. That is, an existing call service in which a user originates a call by inputting a telephone number or selecting a contact number from an address book and then makes a call when a called terminal receives the call is not different from that of the conventional method in terms of a basic method and a user interface environment.

In this respect, there is a need for the development of a method capable of, when a user attempts a call, providing a variety of types of additional information via the display unit of a mobile communication terminal in a stage prior to the performance of a call connection process.

Meanwhile, Korean Patent Application Publication No. 10-2009-0128982 (entitled "System for Providing Multimedia Content during Call Service and Method thereof") discloses a method of providing multimedia content to a terminal when a call is made. However, this method relates to a case where a content server operating in conjunction with a mobile communication network provides multimedia content when a call request has already been made by a calling terminal, rather than when a call is attempted, and has a limitation in that the method is performed in connection with only a called terminal. Furthermore, there is also a limitation in that multimedia content is temporarily displayed only in the state in which a called terminal provides notification of the reception of a call.

In this respect, there is a need for a scheme for providing a variety of types of additional information to a calling terminal based on a called telephone number in a stage prior to the performance of a call connection process.

### [Related Art Document]

[Patent Document] Korean Patent Application Publication No. 10-2009-0128982 (published on December 16,2009)

### Disclosure

### Technical Problem

The present invention has been made keeping in mind the above limitations, and an object of the present invention is to provide a system and method that are capable of, when a mobile communication terminal, particularly a calling terminal, attempts a call, providing a variety of types of additional information via the mobile communication terminal in a stage prior to the performance of a call connection process.

Furthermore, another object of the present invention is to provide a system and method that are capable of registering additional information for a corresponding called telephone number and, when a user generates a call request signal by inputting the corresponding called telephone number, providing the additional information to the user before a call connection process is performed, thereby being able to store information, such as advertising information, public relations information, an event and a notice, as additional information in connection with a predetermined called telephone number and then transfer the additional information to a user attempting to make a call using the corresponding called telephone number in a convenient and efficient way.

### Technical Solution

In order to accomplish the above objects, the present invention provides a system for providing additional information to a mobile communication terminal when a call is attempted, the system including a mobile communication terminal configured to, when a call request signal is generated, receive additional information, set for a called telephone number, from an additional information provision server and then display the received additional information on a display unit before a call connection process is performed; and the additional information provision server configured to send the additional information to the mobile communication terminal.

In this case, the additional information may include advertising information.

Furthermore, the additional information may be sent by the additional information provision server in a web page form.

Furthermore, the additional information may include service menu information to be provided to a user, and the mobile communication terminal may display a service menu interface via the display unit based on the service menu information and perform an operation, corresponding to a service menu option selected by the user, based on the service menu interface.

Furthermore, the mobile communication terminal may include a call request signal detection unit configured to detect the generation of the call request signal; an additional information provision determination unit configured to determine whether or not to provide the additional information for a called telephone number corresponding to the call request signal detected by the call request signal detection unit; and an additional information processing unit configured to, if the additional information provision determination unit determines that the additional information is provided for the called telephone number, access the additional information provision server, receive the additional information and then display the received additional information on the display unit before the call connection process is performed.

Furthermore, the mobile communication terminal may include a call request signal detection unit configured to detect the generation of the call request signal; an additional information provision determination unit configured to determine whether or not to provide the additional information for a called telephone number corresponding to the call request signal detected by the call request signal detection unit; and an additional information processing unit configured to, if the additional information provision determination unit determines that the additional information is provided for the called telephone number, access the additional information provision server, receive the additional information, display a service menu interface based on service menu information, included in the received additional information, on the display unit and then perform an operation, corresponding to a service menu option selected by a user, based on the service menu interface before the call connection process is performed.

Furthermore, the mobile communication terminal may include a call request portion for connecting a call to the called telephone number, and, when a user selects the call request portion, may perform the call connection process so that the call is connected to the called telephone number.

Furthermore, the service menu interface may include a call request portion for connecting a call to the called telephone number, and, when a user selects the call request portion, may perform the call connection process so that the call is connected to the called telephone number.

Furthermore, the additional information provision determination unit may include an additional information management table in which information about whether or not to provide the additional information in accordance with each telephone number and information about the address of the additional information provision server have been previously stored.

Furthermore, the additional information provision determination unit may send the called telephone number to an additional information management server, and may receive a response signal for whether or not to provide additional information and information about the address of an additional information provision server from the additional information management server.

According to another aspect of the present invention, there is provided a method of providing additional information to a mobile communication terminal when a call is attempted, the method including a first step of detecting the generation of a call request signal; a second step of determining whether or not to provide additional information for a called telephone number corresponding to the detected call request signal; and a third step of, if it is determined that the additional information is provided for the called telephone number, accessing an additional information provision server, receiving the additional information and then displaying the received additional information on a display unit before performing a call connection process.

In this case, the additional information may include advertising information.

Furthermore, the additional information may be sent by the additional information provision server in a web page form.

Furthermore, the additional information may include service menu information to be provided to a user; and the third step may include a step of displaying, by the mobile communication terminal, a service menu interface via the display unit based on the service menu information, and performing, by the mobile communication terminal, an operation, corresponding to a service menu selected by the user, based on the service menu interface.

Furthermore, the method may further include a step of providing a call request portion for connecting a call to the called telephone number via the display unit, and, when a user selects the call request portion, the call connection process may be performed so that the call is connected to the called telephone number.

Furthermore, the method may further include a step of providing, by the service menu interface, a call request portion for connecting a call to the called telephone number via the display unit, and, when a user selects the call request portion, the call connection process may be performed so that the call is connected to the called telephone number.

Furthermore, the second step may be performed by an additional information management table in which information about whether or not to provide the additional information in accordance with each telephone number and information about the address of the additional information provision server have been previously stored.

Furthermore, the second step may be performed by sending the called telephone number to an additional information management server and receiving a response signal for whether or not to provide the additional information and information about the address of the additional information provision server from the additional information management server.

### Advantageous Effects

According to the present invention, there can be provided a system and method that are capable of, when a mobile communication terminal, particularly a calling terminal, attempts a call, providing a variety of types of additional information via the mobile communication terminal in a stage prior to the performance of a call connection process.

Furthermore, according to the present invention, there can be provided a system and method that are capable of registering additional information for a corresponding called telephone number and, when a user generates a call request signal by inputting the corresponding called telephone number, providing the additional information to the user before a call connection process is performed, thereby being able to store information, such as advertising information, public relations information, an event and a notice, as additional information in connection with a predetermined called telephone number and then transfer the additional information to a user attempting to make a call using the corresponding called telephone number in a convenient and efficient way.

In particular, when the present invention is applied to a company's customer center or call center, a variety of types of additional information is stored in connection with the representative number of the customer center or call center, and, when a user attempts a call using the corresponding representative number as a called telephone number, a variety of types of advertising/public relations information, events and notices can be transferred in a stage prior to the performance of a call in an efficient way. Furthermore, the service menu itself of the customer center or call center can be configured as the additional information. Accordingly, advantages can be achieved in that a customer center or a call center can be efficiently managed and operated and a user's convenience can be also enhanced.

### Description of Drawings

Fig. 1 is a diagram illustrating the overall configuration and connection state of an embodiment of a system for providing additional information to a mobile communication terminal when a call is attempted according to the present invention;
Fig. 2 is a diagram illustrating the internal configuration of the mobile communication terminal 10 according to the embodiment of Fig. 1;
Fig. 3 is a diagram illustrating an embodiment of a method of providing additional information that is performed in an additional information provision system 100, such as that described with reference to Figs. 1 and 2;
Figs. 4 to 9 illustrate screens that are displayed on the display unit of the mobile communication terminal 10 when the system and method according to the present invention, such as those described with reference to Figs. 1 to 3, are used;
Fig. 10 is a diagram illustrating an example of a case where the elements of the mobile communication terminal 10 for performing the present invention are implemented by an application program (application); and
Fig. 11 is a diagram illustrating an example of the internal configuration of an application program management unit 52.

### Best Mode

Embodiments of the present invention are described in detail below with reference to the accompanying drawings.

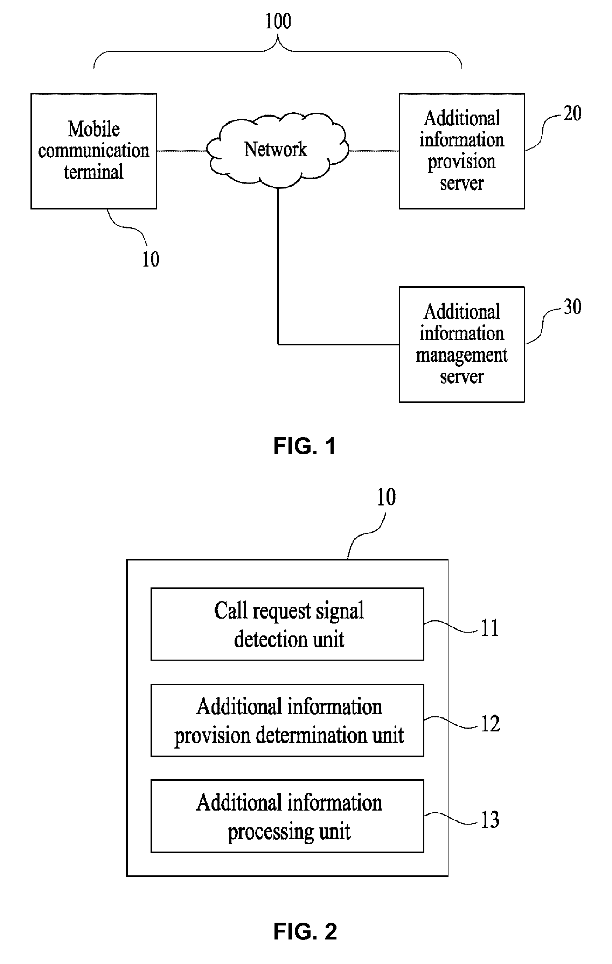

Fig. 1 is a diagram illustrating the overall configuration and connection state of an embodiment of a system for providing additional information to a mobile communication terminal when a call is attempted according to the present invention.

Referring to Fig. 1, the system for providing additional information (hereinafter referred to as the additional information provision system; 100) to a mobile communication terminal when a call is attempted according to the present embodiment includes a mobile communication terminal 10, an additional information provision server 20, and an additional information management server 30.

The mobile communication terminal 10 and the additional information provision server 20 are connected to each other over a network. In this case, the network is based on a concept that includes a known wired/wireless Internet, a mobile communication network or a combination thereof. The mobile communication terminal 10 refers to a known means, such as a conventionally widely known means for receiving mobile communication service over a mobile communication network. The mobile communication terminal 10 in the present invention may preferably be a so-called "smart phone" that is capable of installing and executing an application program (application) and that is equipped with an Internet access means. As is well known, the mobile communication terminal 10 is equipped with a touch screen-type display unit (not illustrated) and that performs input and output functions. Furthermore, the mobile communication terminal 10 includes therein an operating system (OS) that manages the overall operation of the mobile communication terminal 10.

The mobile communication terminal 10 is characterized by the following in the present invention. That is, when a call request signal is generated by a user, the mobile communication terminal 10 functions to receive additional information, set for a called telephone number selected by the user, from the additional information provision server 20 and then display the received additional information on the display unit, at a step prior to a known call connection process is performed.

In this case, the additional information may include advertising information.

Furthermore, the additional information may have an image, moving image or text data form. The additional information may be provided by the additional information provision server 20 in the form of a web page composed of a combination of an image, a moving image and text data.

Meanwhile, the additional information may include service menu information to be provided to a user. In this case, the mobile communication terminal 10 may provide a service menu interface through which a user can perform selection through the display unit based on received service menu information. In this case, the service menu interface refers to an interface in which a service for providing additional service is provided in the form of a menu and thus a user can select the service. When a user selects a specific service menu option based on the service menu interface, an operation corresponding to the corresponding service menu option, for example, an operation, such as the request and reception of a linked web page, is performed.

If the additional information includes the service menu information as described above, the additional information itself including the service menu information may be provided in the form of a web page. Furthermore, a service menu interface may be included in a web page itself and then provided to the mobile communication terminal 10.

Fig. 2 is a diagram illustrating the internal configuration of the mobile communication terminal 10 according to the embodiment of Fig. 1.

Referring to Fig. 2, the mobile communication terminal 10 includes a call request signal detection unit 11, an additional information provision determination unit 12, and an additional information processing unit 13. It should be noted that only elements that belong to the elements of the mobile communication terminal 10 and are related to the present invention are illustrated in Fig. 2 and other common elements of the mobile communication terminal 10 that are not directly related to the present invention are omitted.

The call request signal detection unit 11 functions to detect the generation of a call request signal. The mobile communication terminal 10 provides an input interface (a keypad, a touch screen, etc.) capable of allowing a telephone number to be input as is known. When a user inputs a telephone number through the input interface, a call request signal for connecting a call to the corresponding telephone number is internally generated, and undergoes a processing process required for call connection within the mobile communication terminal 10. Thereafter, the call request signal detection unit 11 sends a call access request signal to a terminal corresponding to the called telephone number over a mobile communication network. Meanwhile, as is well known, the call request signal may be generated when it is selected from an address book instead of using a method of directly inputting a telephone number. The call request signal detection unit 11 functions to detect whether such a call request signal is generated in the mobile communication terminal 10.

If a call request signal is detected by the call request signal detection unit 11, the additional information provision determination unit 12 functions to determine whether or not to provide additional information for a called telephone number corresponding to the detected call request signal. For this purpose, the additional information provision determination unit 12 previously stores information about whether or not to provide additional information in accordance with each telephone number and information about the address (e.g., IP address) of the additional information provision server 20 that will provide the additional information in the additional information management table (not illustrated) of storage means within the mobile communication terminal 10, and checks whether or not to provide the additional information for the called telephone number corresponding to the detected call request signal and the information about the address of the additional information provision server 20.

If a setting for providing the additional information has not been made, the additional information provision determination unit 12 may transfer the result of the check to the additional information processing unit 13. The additional information processing unit 13 may perform a call connection process according to a normal procedure. If a setting for providing additional information has been made, the additional information provision determination unit 12 transfers the information about the address of the additional information provision server that will provide the additional information from the additional information management table to the additional information processing unit 13.

Meanwhile, the additional information provision determination unit 12 may determine whether or not to provide the additional information via an external additional information management server 30 instead of performing the aforementioned process. In this case, the additional information provision determination unit 12 sends the called telephone number to the additional information management server 30, and receives a response signal regarding whether or not to provide the additional information and the information about the address of the additional information provision server from the additional information management server 30. In this case, the additional information management server 30 includes a database having a form similar to that of the aforementioned additional information management table, and checks whether or not to provide the additional information and the address information based on the database.

If it is determined by the additional information provision determination unit 12 that the additional information is provided for the called telephone number, the additional information processing unit 13 receives, from the additional information provision determination unit 12, information about the address of the additional information provision server required to be accessed by the mobile communication terminal 10 in order to receive the additional information from the additional information provision determination unit 12, and accesses the additional information provision server 20, receives the additional information and then displays the received additional information on the display unit of the mobile communication terminal 10, before a call connection process is performed.

As described above, the additional information may be provided in the form of a web page including service menu information or a service menu interface. An operation corresponding to a service menu option selected by a user based on a service menu interface displayed on the display unit, for example, an operation, such as the request and display of a web page, is allowed to be performed.

Meanwhile, if a web page including a service menu interface is provided as additional information, the service menu interface may include a call request portion for connecting a call to the called telephone number. When a user selects the provided call request portion, a call connection process is performed so that the call is connected to the called telephone number.

In this case, the call request portion may be included in an interface for a call request that is basically provided by the OS of the mobile communication terminal.

The additional information provision server 20 and the additional information management server 30 are described with reference to Fig. 1.

The additional information provision server 20 functions to send additional information to the mobile communication terminal 10. The information about the address of the additional information provision server 20 is obtained by the additional information provision determination unit 12 of the mobile communication terminal 10. When access is requested based on the address information obtained by the additional information provision determination unit 12, the additional information is provided to the mobile communication terminal 10 in response to the request. As described above, the additional information may be advertising information. Furthermore, the additional information may have an image, moving image or text data form, or may have a web page form composed of a combination of an image, a moving image and text data. Furthermore, the additional information may include service menu information. Furthermore, the additional information may be provided in the form of a web page including a service menu interface based on service menu information.

Meanwhile, the advertising information may be provided by a separate advertisement server (not illustrated). In this case, the advertisement server may be configured in the additional information provision server 20 in an integrated fashion. Furthermore, the aforementioned additional information management server 30 may also be configured in the additional information provision server 20 in an integrated fashion.

Meanwhile, the additional information provision server 20 may be provided with an additional information database (not illustrated) for storing additional information to be provided to the mobile communication terminal 10. Since whether or not to provide additional information is determined based on a called telephone number as described above, the additional information provision server 20 may classify and store additional information in accordance with a plurality of called telephone numbers.

If a request for whether or not to provide additional information is received from the additional information provision determination unit 12 as described above, the additional information management server 30 functions to determine whether or not to provide the additional information and provide information about the address of the additional information provision server 20. In this case, if the additional information provision determination unit 12 autonomously determines whether or not to provide the additional information via the additional information management table as described above, the configuration of the additional information management server 30 may be omitted.

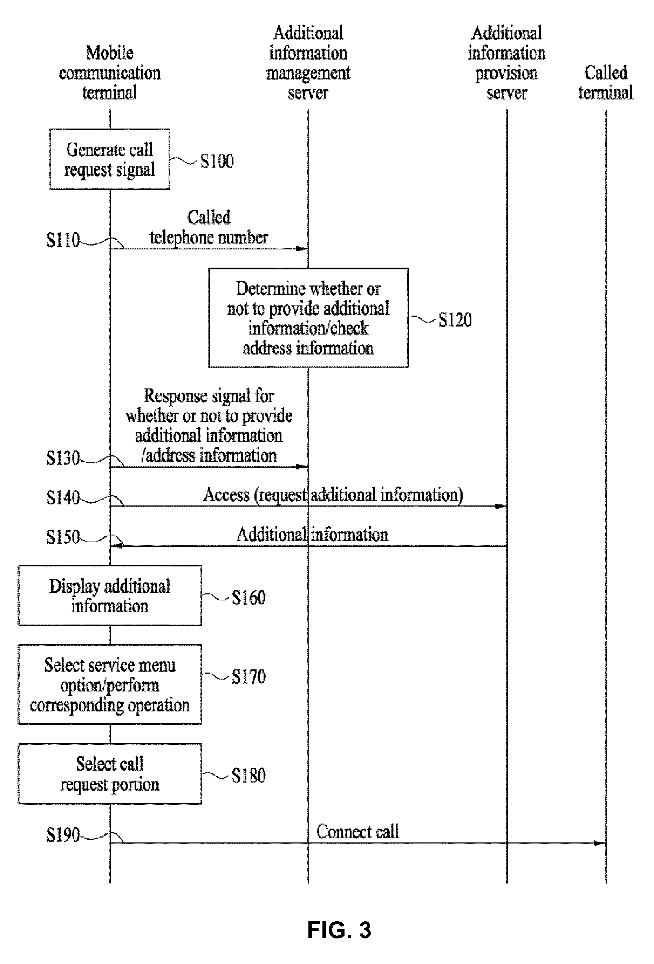

Fig. 3 is a diagram illustrating an embodiment of a method of providing additional information which is performed in the additional information provision system 100, such as that described with reference to Figs. 1 and 2.

Referring to Fig. 3, first, the call request signal detection unit 11 of the mobile communication terminal 10 (calling terminal) detects the generation of a call request signal at step S100. As described above, the generation of the call request signal may be performed by inputting a telephone number or by performing an operation of selecting the telephone number from an address book.

When the call request signal is detected by the call request signal detection unit 11, the additional information provision determination unit 12 of the mobile communication terminal 10 determines whether or not to provide additional information for a called telephone number corresponding to the detected call request signal. For this purpose, the additional information provision determination unit 12 sends the called telephone number corresponding to the call request signal to the additional information management server 30 at step S110.

The additional information management server 30 checks whether or not to provide the additional information and the information about the address of the additional information provision server 20 that will provide the additional information for the corresponding telephone number via the additional information management database previously stored in the additional information management server 30 based on the received telephone number as described above at step S120. If it is determined that the additional information is provided, the additional information management server 30 sends a corresponding response signal and the information about the address of the additional information provision server 20 to the mobile communication terminal 10 at step S130. If it is determined that the additional information is not provided, the additional information management server 30 sends a corresponding response signal to the mobile communication terminal 10.

When the response signal indicating that the additional information will be provided and the information about the address of the additional information provision server 20 are received, the additional information provision determination unit 12 of the mobile communication terminal 10 transfers the received address information to the additional information processing unit 13. If the response signal indicating that the additional information will not be provided is received, the present procedure is terminated and then a call connection process is performed according to a normal procedure as described above.

When the response signal indicating that the additional information will be provided for the called telephone number and the information about the address of the additional information provision server 20 are received, the additional information processing unit 13 of the mobile communication terminal 10 receives the address information from the additional information provision determination unit 12, and accesses the additional information provision server 20 based on the received address information and then requests the additional information from the additional information provision server 20 before a call connection process is performed at step S140.

When a request signal for the additional information is received from the mobile communication terminal 10, the additional information provision server 20 sends the previously stored additional information to the mobile communication terminal at step S150.

When the additional information is received from the additional information provision server 20, the additional information processing unit 13 of the mobile communication terminal 10 displays the received additional information via the display unit at step S160.

As described above, the additional information may include advertising information, and may be provided in the form of a web page. Furthermore, the provided web page may include a service menu interface that enables a user to make a selection. If a web page including a service menu interface is received as the additional information, the additional information processing unit 13 displays the web page on the display unit and performs an operation corresponding to a service menu option selected by a user based on the service menu interface at step S170.

As described above, the operation may be the request and reception of a web page. In this case, the web page may be provided by the additional information provision server 20 or may be provided via a separate web server. In this case, a service menu option stores information about an address for a link to the web page. When a user selects the corresponding service menu option, the web page is requested based on the information about the address of the corresponding web page, received, and displayed on the display unit.

Meanwhile, as described above, the service menu interface may include a call request portion for connecting a call to the called telephone number. If a user selects the call request portion at step S180, a call connection process is performed so that the call is connected to the called telephone number at step S190. It should be noted that elements, such as a mobile communication network and a switchboard included in the mobile communication network, are omitted and not illustrated in Fig. 3.

Meanwhile, the embodiment of Fig. 3 corresponds to a case where the additional information management server 30 determines whether or not to provide additional information. The configuration of the additional information management server 30 maybe omitted in Figs. 1 and 2 as described above. In this case, the determination of whether or not to provide the additional information is autonomously performed by the additional information provision determination unit 12 of the mobile communication terminal 10. That is, operations corresponding to steps S110 to S130 are performed by the additional information provision determination unit 12.

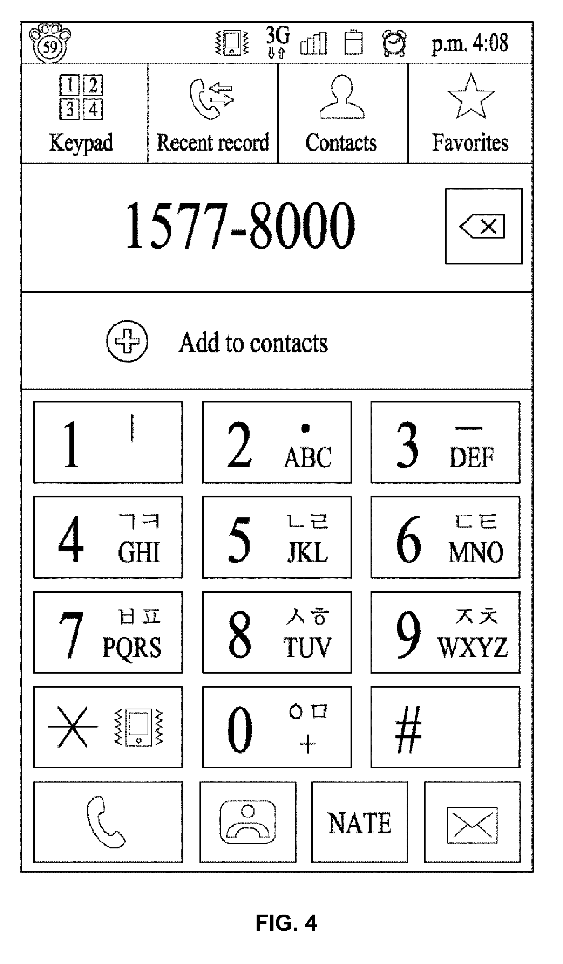

Figs. 4 to 9 illustrate screens that are displayed on the display unit of the mobile communication terminal 10 when the system and method according to the present invention, such as those described with reference to Figs. 1 to 3, are used.

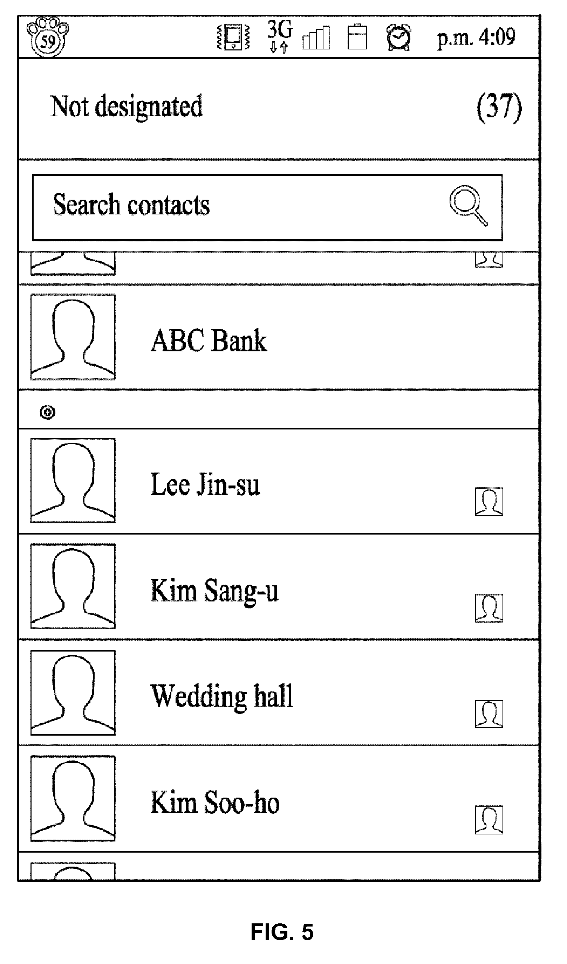

Figs. 4 and 5 illustrate screens of the display unit when a call request signal is generated by the mobile communication terminal 10. Fig. 4 corresponds to a case where a user inputs a called telephone number via an input keypad implemented as a touch pad. In this state, when a button having a telephone shape provided at a lower left end is selected, a call request signal is generated. Fig. 5 illustrates a case where a contact number is selected from an address book. If "ABC Bank" is selected in Fig. 5, a call request signal is generated for a called telephone number stored in accordance with the corresponding contact number.

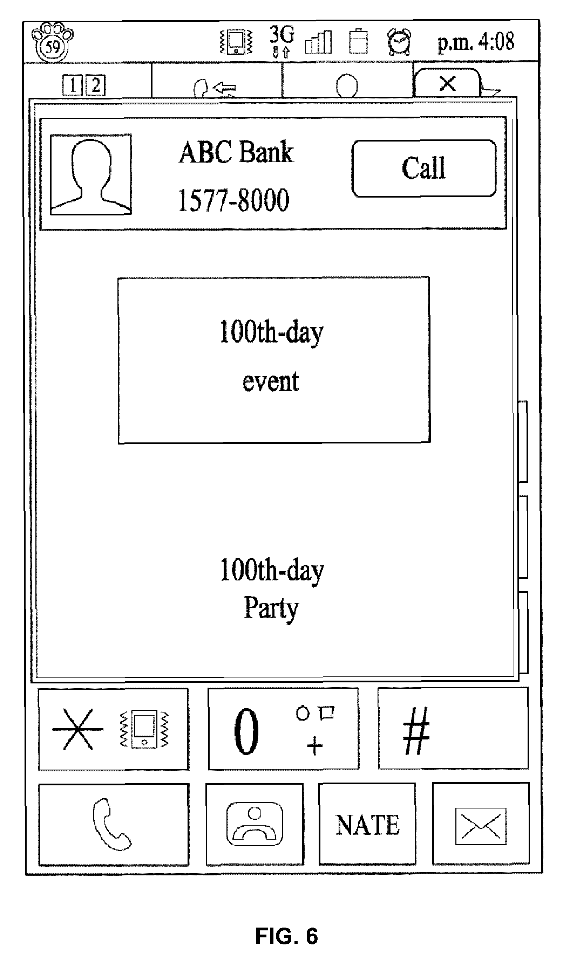

Fig. 6 is a screen illustrating a state in which when a call request signal is generated and detected by the mobile communication terminal 10 as in Figs. 4 and 5, the additional information provision server 20 has received additional information through a process, such as that described with reference to Figs. 1 to 3. The case of Fig. 6 corresponds to a state in which advertising information (event information) has been received as the additional information.

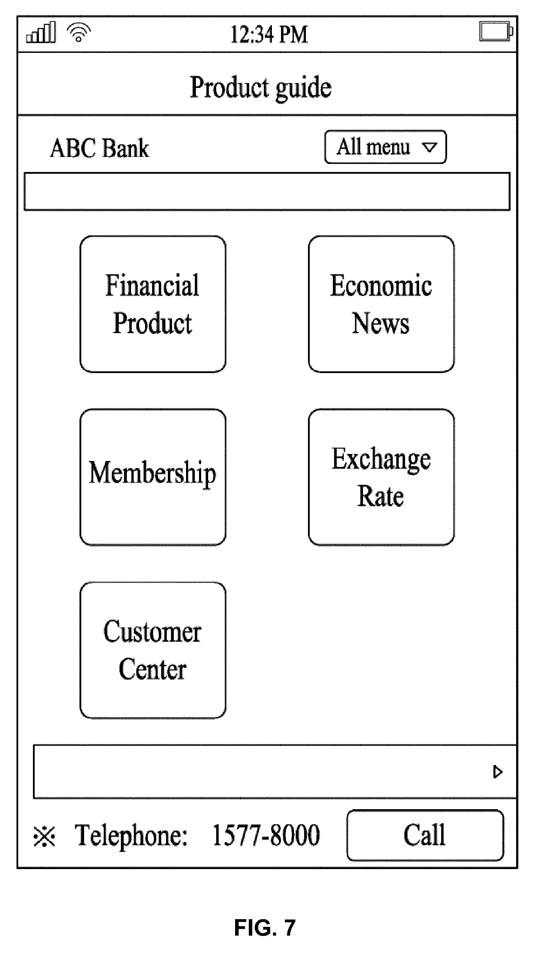

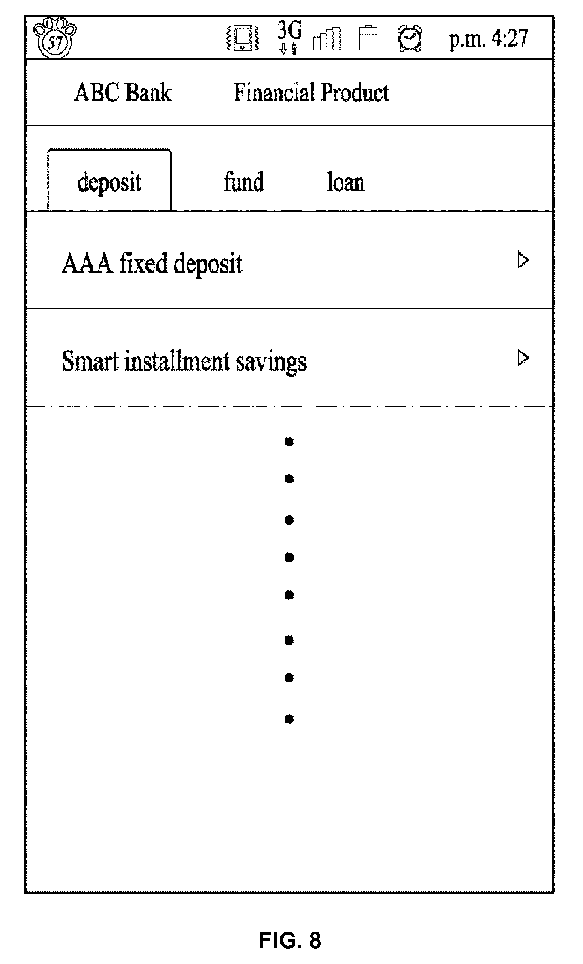

Fig. 7 is a screen illustrating another case where the additional information provision server 20 has received additional information, and is a screen illustrating a state in which the additional information has been implemented and received in the form of a web page. It can be seen that the web page of Fig. 7 includes a service menu interface including service menu options, such as "Financial Product," "Economic News," "Membership," "Exchange Rate" and "Customer Center". When a user selects a desired service menu option via the service menu interface, an operation corresponding to the corresponding service menu option is performed. For example, when a user selects the service menu option "Financial Product," a web page linked to "Financial Product" is requested, received, and displayed on the display unit, as in Fig. 8.

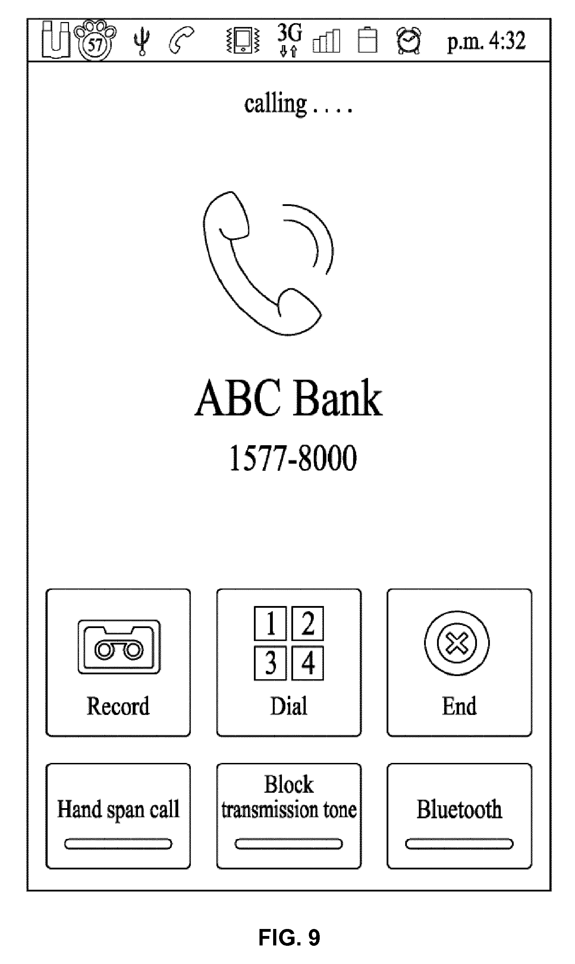

Meanwhile, it may be seen that a call request portion ("1577-8000 Call") for connecting a call to the called telephone number is provided at the bottom of Fig. 7. When a user selects the call request portion, a call connection process is performed so that the call is connected to the called telephone number 1577-8000. Fig. 9 illustrates a screen of the display unit when a user selects the call request portion.

As illustrated in Figs. 4 to 9, the present invention is useful when a service, such as a company's customer center or call center, is provided. A company that deals with consumers manages a customer center or call center. It takes a very long time for a user to receive a desired service because a customer center or a call center is generally configured such that a user selects menu options by pressing buttons using an ARS method based on a voice call. In such a case, if the present invention is applied, menu options provided by the customer center can be visually represented on the display unit of the mobile communication terminal in a clearly visible manner when a setting for providing additional information in accordance with the representative telephone number of a company's customer center or call center has been made and a user generates a call request signal by inputting the corresponding representative telephone number, thereby being capable of improving a user's convenience. Although Figs. 4 to 9 have illustrated the common menu options of a web page intended for the provision of information, it may be possible to classify service menu options into, for example, "1. Query," "2. Transfer service," and "3. Connection to a counselor" and directly connect a call to a corresponding service when a corresponding service menu option is selected.

Furthermore, according to the present invention, a company can conveniently and efficiently transfer the company's public relations/advertisement information, an event or a notice to a customer because advertising information can be provided in accordance with a corresponding called telephone number, as illustrated in Fig. 6.

The elements of the mobile communication terminal 10 for implementing the aforementioned system and method for providing additional information to the mobile communication terminal when a call is attempted according to the present invention is described below.

First, the elements of the mobile communication terminal 10 for performing the present invention, such as those illustrated in Fig. 2, may be implemented to be included in an OS included in the mobile communication terminal 10. In another method, the elements of the mobile communication terminal 10 may be added to the mobile communication terminal 10 in the form of an application program (application) afterward so that the application program functions as the elements. In particular, for example, an OS, such as an Android OS, is particularly suitable for the present invention because it is open such that a terminal manufacturer or an application program manufacturer receives a call state-related event (a cell detection request signal in the present invention) from the OS and performs a variety of types of processing. For example, an application may be implemented such that when a call request signal is generated in the Android OS, the call request signal detection unit registered with the application detects the call request signal as described above, stops a subsequent step, that is, a normal call connection process, and operates the present invention, such as that described above.

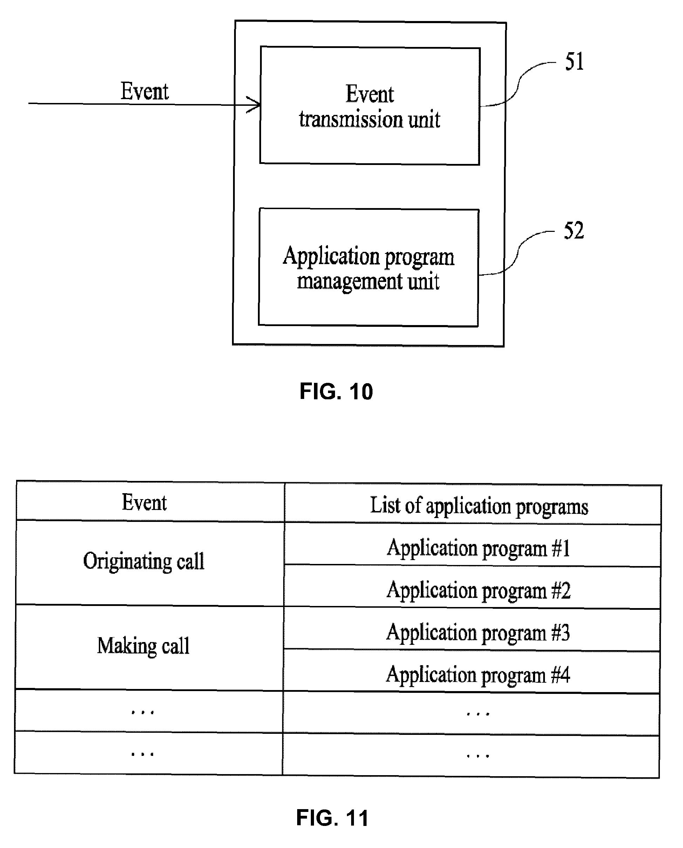

Fig. 10 is a diagram illustrating an example of a case where the elements of the mobile communication terminal 10 for performing the present invention are implemented by an application program (application).

Referring to Fig. 10, the mobile communication terminal 10 includes an event transmission unit 51 and an application program management unit 52 within an OS. The configuration of Fig. 10 illustrates the actual configuration of an Android OS. Although there may be differences in terms between the Android OS and other OSs, the other OSs have a basic principle similar to that of the Android OS.

The event transmission unit 51 functions to receive an event occurring in the hardware or application program (application) of the mobile communication terminal 10, checks an application program that will send the received event via the application program management unit 52, and provides notification that the event has occurred using the checked application program.

The application program management unit 52 previously stores a list of application programs that will receive corresponding events in accordance with the types of events. In general, the list of application programs is registered with the application program management unit 52 when the application programs are installed.

Fig. 11 is a diagram illustrating an example of the internal configuration of the application program management unit 52.

Referring to Fig. 11, the application program management unit 52 includes the types of events 521, and a list of application programs 522 that will receive corresponding events. In Fig. 11, the events "Originating a call" and "Making a call" have been illustrated as being the types of events. The event "Originating a call" is an event for originating a call, and may be generated by inputting a telephone number onto a keypad, selecting a contact number from an address book, or an application program requesting the origination of a call. When the event "Originating a call" is generated, the event transmission unit 51 checks a list of application programs, set for the corresponding event, in the list of application programs 522, such as that illustrated in Fig. 11. The list of application programs registered in Fig. 11 includes two types: an application program #1 and an application program #2. The application program management unit 52 notifies the event transmission unit 51 that the application program #1 and the application program #2 have been registered for the event "Originating a call". The event transmission unit 51 sends a signal, indicating that the event "Originating a call" has been generated, to the application program #1 and the application program #2.

In this case, when sending the event to the application programs, the event transmission unit 51 may simultaneously notify all the application programs, included in the application program list, of the event, or may use a method of first notifying any one of the application programs of the event and then notifying the other of the application programs of the event when the execution of the former application program has been completed or stopped. A method of providing notification of an event may be set within the application program management unit 52.

For example, in the case of the event "Originating a call," the application program #1 may be first notified of the event, and the application program #2 may be notified of the event when the execution of the application program #1 has been terminated. In this case, when an acknowledgement request signal is received from the event transmission unit 51, the application program management unit 52 first provides notification of information about the application program #1. When the information about the application program #1 is received as an acknowledgement response signal for the corresponding event from the application program management unit 52, the event transmission unit 51 sends the event to the application program #1. When the event is received, the application program #1 is loaded onto an OS and then executed.

The present invention described with reference to Figs. 1 to 9 may be implemented based on the principle described with reference to Figs. 10 and 11. The call request signal detection unit 11 of Fig. 2 may be configured to be included in the event transmission unit 51 of Fig. 10. The additional information provision determination unit 12 and the additional information processing unit 13 may be implemented in the form of an application program.

That is, when the event transmission unit 51 detects a call request signal as one of the events, the event transmission unit 51 requests information about an application program, set for an event in which the call request signal has been detected (the event "Originating a call" in Fig. 10), from the application program management unit 52 as described above. The application program management unit 52 notifies the event transmission unit 51 of information about the application program #1 registered for the corresponding event. The event transmission unit 51 sends the event to the application program #1, and executes the application program #1. In this case, the application program #1 includes the elements of the additional information provision determination unit 12 and the additional information processing unit 13, such as those described with reference to Figs. 1 to 9, and operates as described with reference to Figs. 1 to 9 above, thereby providing additional information to the mobile communication terminal 10.

If the call request portion is selected by a user as described above with reference to Figs. 1 to. 9 while the additional information is being provided, the application program #1 terminates its execution, and notifies the event transmission unit 51 of the termination of the execution. The event transmission unit 51 performs a process for connecting a telephone call by executing the application program #2 (an application program for performing the origination of a call).

Although the preferred embodiments of the present invention have been described above, it should be noted that the present invention is not limited to the embodiments and may be changed and modified in various ways based on the scope of the present invention described in this specification including the claims and drawings. For example, the method of implementing the present invention using the application programs described with reference to Figs. 10 and 11 is illustrative, and other methods may be used depending on the type of OS or the internal configuration of an OS.

## Claims

1. A system for providing additional information to a mobile communication terminal when a call is attempted, the system comprising:
a mobile communication terminal configured to, when a call request signal is generated, receive additional information, set for a called telephone number, from an additional information provision server and then display the received additional information on a display unit before a call connection process is performed; and
the additional information provision server configured to send the additional information to the mobile communication terminal.

2. The system of claim 1, wherein the additional information comprises advertising information.

3. The system of claim 1, wherein the additional information is sent by the additional information provision server in a web page form.

4. The system of claim 1, wherein the additional information comprises service menu information to be provided to a user, and the mobile communication terminal displays a service menu interface via the display unit based on the service menu information and performs an operation, corresponding to a service menu option selected by the user, based on the service menu interface.

5. The system of claim 1, wherein the mobile communication terminal comprises:
a call request signal detection unit configured to detect the generation of the call request signal;
an additional information provision determination unit configured to determine whether or not to provide the additional information for a called telephone number corresponding to the call request signal detected by the call request signal detection unit; and
an additional information processing unit configured to, if the additional information provision determination unit determines that the additional information is provided for the called telephone number, access the additional information provision server, receive the additional information and then display the received additional information on the display unit before the call connection process is performed.

6. The system of claim 4, wherein the mobile communication terminal comprises:
a call request signal detection unit configured to detect the generation of the call request signal;
an additional information provision determination unit configured to determine whether or not to provide the additional information for a called telephone number corresponding to the call request signal detected by the call request signal detection unit; and
an additional information processing unit configured to, if the additional information provision determination unit determines that the additional information is provided for the called telephone number, access the additional information provision server, receive the additional information, display a service menu interface based on service menu information, included in the received additional information, on the display unit and then perform an operation, corresponding to a service menu option selected by a user based, on the service menu interface before the call connection process is performed.

7. The system of claim 1, wherein the mobile communication terminal comprises a call request portion for connecting a call to the called telephone number, and, when a user selects the call request portion, performs the call connection process so that the call is connected to the called telephone number.

8. The system of claim 4, wherein the service menu interface comprises a call request portion for connecting a call to the called telephone number, and, when a user selects the call request portion, performs the call connection process so that the call is connected to the called telephone number.

9. The system of claim 5 or 6, wherein the additional information provision determination unit comprises an additional information management table in which information about whether or not to provide the additional information in accordance with each telephone number and information about an address of the additional information provision server have been previously stored.

10. The system of claim 5 or 6, wherein the additional information provision determination unit sends the called telephone number to an additional information management server, and receives a response signal for whether or not to provide additional information and information about an address of an additional information provision server from the additional information management server.

11. A method of providing additional information to a mobile communication terminal when a call is attempted, the method comprising:
a first step of detecting generation of a call request signal;
a second step of determining whether or not to provide additional information for a called telephone number corresponding to the detected call request signal; and
a third step of, if it is determined that the additional information is provided for the called telephone number, accessing an additional information provision server, receiving the additional information and then displaying the received additional information on a display unit before performing a call connection process.

12. The method of claim 11, wherein the additional information comprises advertising information.

13. The method of claim 11, wherein the additional information is sent by the additional information provision server in a web page form.

14. The method of claim 11, wherein:
the additional information comprises service menu information to be provided to a user; and
the third step comprises a step of displaying, by the mobile communication terminal, a service menu interface via the display unit based on the service menu information, and performing, by the mobile communication terminal, an operation, corresponding to a service menu selected by the user, based on the service menu interface.

15. The method of claim 11, further comprising a step of providing a call request portion for connecting a call to the called telephone number via the display unit, wherein, when a user selects the call request portion, the call connection process is performed so that the call is connected to the called telephone number.

16. The method of claim 14, further comprising a step of providing, by the service menu interface, a call request portion for connecting a call to the called telephone number via the display unit, wherein, when a user selects the call request portion, the call connection process is performed so that the call is connected to the called telephone number.

17. The method of claim 11, wherein the second step is performed by an additional information management table in which information about whether or not to provide the additional information in accordance with each telephone number and information about an address of the additional information provision server have been previously stored.

18. The method of claim 11, wherein the second step is performed by sending the called telephone number to an additional information management server and receiving a response signal for whether or not to provide the additional information and information about an address of the additional information provision server from the additional information management server.
